# EUROPÄISCHE PATENTSCHRIFT

(11) **EP 3 183 133 B1**
(45) Veröffentlichungstag und Bekanntmachung des Hinweises auf die Patenterteilung: **02.08.2017**
(21) Anmeldenummer: 15808182.8
(22) Anmeldetag: 10.12.2015
(51) Int. Cl.: B60J 7/02, B60J 7/043

(54) **GLEITER ZUM FÜHREN EINES VERLAGERBAREN ELEMENTS**
SLIDER FOR GUIDING A MOVABLE MEMBER
UN COULISSEAU DE GUIDAGE D'UN ÉLÉMENT MOBILE

(30) Priorität: 12.12.2014 DE 102014018285
(43) Veröffentlichungstag der Anmeldung: 28.06.2017
(73) Patentinhaber: Webasto SE, 82131 Stockdorf (DE)
(72) Erfinder: KNÖPFLE, Julian, 82131 Stockdorf (DE); REIHL, Peter, 82131 Stockdorf (DE)
(74) Vertreter: Schwan Schorer & Partner mbB
(86) Internationale Anmeldenummer: PCT/EP2015/079306
(87) Internationale Veröffentlichungsnummer: WO 2016/092039

(56) Entgegenhaltungen:
- EP-A1- 2 554 415
- EP-A2- 1 777 090
- DE-A1- 3 817 391
- DE-B3-102008 017 526
- DE-U1-202008 007 938
- FR-A1- 2 978 380

## Beschreibung

Die vorliegende Erfindung betrifft einen Gleiter gemäß dem Oberbegriff von Anspruch 1.

Ein gattungsgemäßer Gleiter ist aus der EP 1 285 796 A1 bekannt. Bei diesem bekannten Stand der Technik ist ein Deckelelement zum wahlweisen Öffnen und Verschließen einer Dachöffnung in einem Fahrzeugdach verlagerbar am Fahrzeug angeordnet. Damit der Deckel relativ zum Fahrzeug verschoben werden kann, ist ein Gleiter vorgesehen, mittels welchem der Deckel zusammen mit dem Gleiter entlang eines Führungselements in Form einer Führungsschiene verschiebbar angeordnet ist. Der Gleiter ist dabei mehrteilig ausgeführt und weist mehrere Einzelteile aus Kunststoff und Metall auf. Ein weiterer gattungsgemäßer Gleiter ist aus der EP 2 554 415 A1 bekannt, der als nächster Stand der Technik gilt. Aus der DE 10 2008 017 526 B3 ist ebenfalls ein mehrteiliger Gleiter bekannt. Da bei solchen Gleitern mehrere Teile zu einem Gleiter zusammengebaut werden, entstehen hohe Werkzeug- und Montagekosten. Mehrteilige Gleiter können ferner störende Geräusche entwickeln, insbesondere wenn sich die Einzelteile gegeneinander verlagern. Größere Toleranzen müssen weiterhin bei bekannten Gleitern dadurch ausgeglichen werden, dass sich Einzelteile des Gleiters gegeneinander verlagern können. Dies hat den Nachteil, dass neben den oben angesprochenen Punkten zu den entstehenden Kosten, der Ausgleich von Toleranzen nur über komplexe Lösungen realisiert werden kann.

Es ist Aufgabe der vorliegenden Erfindung, einen Gleiter zu schaffen, bei welchem die vorgenannten Nachteile überwunden werden.

Diese Aufgabe wird gelöst durch einen Gleiter gemäß dem Kennzeichen von Anspruch 1.

Erfindungsgemäß ist der Gleiter einteilig ausgeführt, wobei ein Metallbereich des Gleiters mit einem Kunststoffbereich mindestens teilweise oder komplett umspritzt ist. Der erfindungsgemäße Gleiter ist ferner so ausgebildet, dass mindestens ein Abschnitt des Gleiters das Führungselement mindestens teilweise umgreift.

Dies bietet den Vorteil, dass ein einteiliger Gleiter entsteht, dessen Herstellung besonders kostengünstig, und dessen Montage besonders einfach ist. Durch die einteilige Ausführung zweier miteinander verbundener Komponenten können die Eigenschaften des Gleiters optimal an die Anwendung angepasst werden. So kann durch die Auswahl eines entsprechenden Kunststoffs (beispielsweise POM) die Gleiteigenschaft des Gleiters verbessert und die Entstehung störender Geräusche beim Verschieben des Gleiters unterdrückt werden. Durch entsprechende Auswahl des Materials und der Form der zweiten Komponente, des Metallbereichs, kann insbesondere die Stabilität des Gleiters optimal eingestellt werden. Dies bedeutet nicht nur, dass der Gleiter stabil genug ist, um die resultierenden Kräfte aufzunehmen, sondern dessen Stabilität oder Elastizität kann so eingestellt werden, dass über eine entsprechende elastische Verformung des Metallbereichs und mit diesem des Gleiters insgesamt, ein Toleranzbereich abgedeckt wird. Solche Toleranzen können notwendig sein, wenn der Gleiter entlang einer gekrümmten Bahn verlagert werden soll. Ein solchermaßen elastisch verformbarer Gleiter kann auch einen Führungsabschnitt eines Führungselements aufnehmen, der eine größere Stärke als eine zugehörige Öffnung im Gleiter aufweist, also überdimensionier ist, um ein Spiel zu vermeiden. Bei einem erfindungsgemäßen Gleiter kann durch eine entsprechende Einstellung der elastischen Verformbarkeit des Gleiters, die insbesondere über den Metallbereich des Gleiters definiert wird, vorgesehen werden, dass sich der Gleiter an solchen Krümmungen anpassen kann. Damit wird verhindert, dass wie bei bekannten Gleitern große Toleranzen im Gleiter vorgesehen sein müssen, um solche Krümmungen zu überwinden, was zu einem unerwünschten Spiel zwischen Gleiter und Führungselement führt. Mit anderen Worten kann also bei einem erfindungsgemäßen Gleiter dessen Metallbereich in seiner elastischen Verformbarkeit über die Materialdicke und über die Form des Metallbereichs auf die entsprechende Anwendung, d.h. insbesondere auf vorgesehene Krümmungen und / oder auf eine vorgesehene Überdimensionierung eines zugeordneten Führungselements optimal eingestellt werden. Der Kunststoffbereich des Gleiters, der den Metallbereich mindestens teilweise, vorzugsweise komplett umgibt, und an diesen angespritzt ist, kann separat hiervon die Gleiteigenschaften des Gleiters weiter verbessern.

Der Metallbereich ist als Federstahleinlage ausgebildet, die mit dem Kunststoffbereich mindestens teilweise umspritzt ist. Die Verwendung eines Federstahlmaterials für den Metallbereich bildet die oben ausgeführten Vorteile weiter aus. Damit ist gewährleistet, dass der Metallbereich des Gleiters und mit dem der Gleiter insgesamt nicht plastisch, sondern lediglich elastisch verformt wird. Somit kann der Gleiter eine Krümmungen eines zugeordneten Führungselements überwinden, ohne dass es zu einer Klemmwirkung kommt. Ein Spiel zwischen Gleiter und zugeordnetem Führungselement oder das Vorsehen von mehreren Drehachsen oder beweglichen Teilen innerhalb des Gleiters ist somit nicht notwendig. Das Führungselement kann weiterhin oder alternativ so dimensioniert sein, dass es den Metallbereich elastisch dehnt, um ein Spiel zu verhindern.

Bevorzugte Ausführungsformen der Erfindung ergeben sich aus den Unteransprüchen.

Vorzugsweise ist das Führungselement im Wesentlichen in einer Richtung parallel zur Fahrzeuglängsachse ausgerichtet und weist einen Führungsabschnitt auf, der quer zu der Fahrzeuglängsachse einen Querschnitt aufweist, wobei der Gleiter eine dem Querschnitt entsprechende durchgehende Öffnung aufweist, die zur Aufnahme des Führungsabschnitts ausgebildet ist. Der Gleiter ist dabei entlang des Führungselements in der Richtung parallel zur Fahrzeuglängsachse und relativ zum Führungsabschnitt verlagerbar und kann diesen führen oder durch diesen geführt werden. Dabei können sowohl der Kunststoffbereich als auch der Metallbereich eine entsprechende durchgehende L-förmige Öffnung aufweisen. Zur Montage kann der Führungsabschnitt in den Gleiter eingeschoben werden und ist dann gegen ein Lösen vom Führungsabschnitt gesichert. Der Querschnitt des Führungsabschnitts und der Öffnung ist vorzugsweise L- oder U-förmig.

Bei einer weiteren Ausführungsform der Erfindung weist dass der Gleiter mindestens einen Abschnitt auf, der quer zur Fahrzeuglängsachse eine Öffnung bis auf einen Schlitz umschließt, wobei die Öffnung und der Schlitz zur Aufnahme eines Führungsabschnitts des Führungselements ausgebildet sind, indem der Führungsabschnitt durch den Schlitz in die Öffnung eingreifen kann. Der Eingriff ist gegen ein Lösen gesichert, indem der Führungsabschnitt im Bereich der Öffnung breiter ist als der Schlitz, sodass der Gleiter entlang des Führungselements in der Richtung parallel zur Fahrzeuglängsachse und relativ zum Führungsabschnitt verlagerbar ist. Der Gleiter kann zwei solcher Abschnitte aufweisen, die in Richtung der Fahrzeuglängsachse hintereinander angeordnet sind, und einen zwischen diesen Abschnitten angeordneten Befestigungsbereich, an dem eine Befestigungsachse angeordnet ist zum verschwenkbaren Lagern des Gleiters um eine erste Drehachse, die quer zur Fahrzeuglängsachse ausgerichtet ist. Dies biete den Vorteil dass der Gleiter verschwenkt werden kann, und so einer Krümmung des Führungselements noch besser folgen kann.

Die Befestigungsachse ist vorzugsweise durch eine Öffnung im Befestigungsbereich gesteckt und gegen ein Lösen der Befestigung gesichert, indem an dem durchgesteckten Ende der Befestigungsachse hinter der Öffnung eine Sicherung vorzugsweise in Form einer Vertaumelung angeordnet ist. Dies bietet eine besonders einfache und stabile Montage des Gleiters.

Besonders bevorzugt ist eine Ausführungsform, bei welcher der Metallbereich mit dem Kunststoffbereich vollständig umspritzt ist. Die bietet beispielsweise den besten Schutz gegen eine Geräuschentwicklung. Dabei können Öffnungen durch den Kunststoffbereich hindurch vorgesehen sein, um den Metallbereich für Befestigungsmittel (wie Schrauben) oder Werkzeuge zur Montage zugänglich zu machen.

Bei einer weiteren besonders bevorzugten Ausführungsform der Erfindung ist das verlagerbare Element ein Deckel zum wahlweisen Öffnen und Verschließen einer Öffnung in einem Dach des Fahrzeugs. Das Führungselement ist an dem Deckel angeordnet, und der Gleiter an einem Ausstellhebel, der um eine zweite Drehachse, die quer zur Fahrzeuglängsachse ausgerichtet ist, verschwenkt werden kann. Der Deckel kann im Bereich einer Deckelhinterkante durch ein Aufstellen des Ausstellhebels bei einer Bewegung des Deckels nach hinten über eine Dachfläche des Dachs angehoben wird, wobei bei der Bewegung des Deckels relativ zur Dachöffnung das Führungselement relativ zum Gleiter bewegt und durch diesen geführt wird.

Bei einer weiteren besonders bevorzugten Ausführungsform der Erfindung weist der Kunststoffbereich des Gleiters einen Kontaktbereich auf, der zum Eingriff mit dem Führungselement vorgesehen ist. Dieser Kontaktbereich ist gewölbt ausgebildet, wobei die Wölbung so ausgestaltet ist, dass der Gleiter Krümmungsradien des Führungselements folgen kann. Die Krümmung eines Führungselementes wird dann in erster Linie durch die Form des Kontaktbereichs ohne Klemmwirkung überwunden. Erst nachrangig spielt hierfür die Elastizität des Gleiters und dessen Metallbereichs beispielsweise aus Federstahl eine Rolle. Der Federstahl braucht dann in erster Linie nur Linie die Toleranzen des Führungselements auszugleichen. Durch die Verwendung eines Federstahls für den Metallbereich eines Gleiters kann weiterhin das Öffnungsmaß des Gleiters kleiner gewählt werden als das Maß des umgriffenen Führungselementes wodurch eine spielfreies Führung gewährleistet ist.

Im Folgenden wird die Erfindung anhand der beigefügten Figuren beispielhaft näher erläutert. Dabei zeigt:
- Fig.1:: mittels der Abbildungen 1a bis 1d den Bewegungsablauf eines Deckels einer Scheibedachanordnung von einem geschlossenen Zustand in einen geöffneten Zustand der Schiebedachanordnung, wobei die Schiebedachanordnung einen erfindungsgemäßen Gleiter aufweist;
- Fig. 2 bis 3:: den Gleiter der Fig. 1;
- Fig. 4:: den Metallbereich des Gleiters der Fig. 1 bis 3 ohne den Kunststoffbereich; und
- Fig. 5:: einen Längsschnitt durch den Gleiter der Fig. 1.

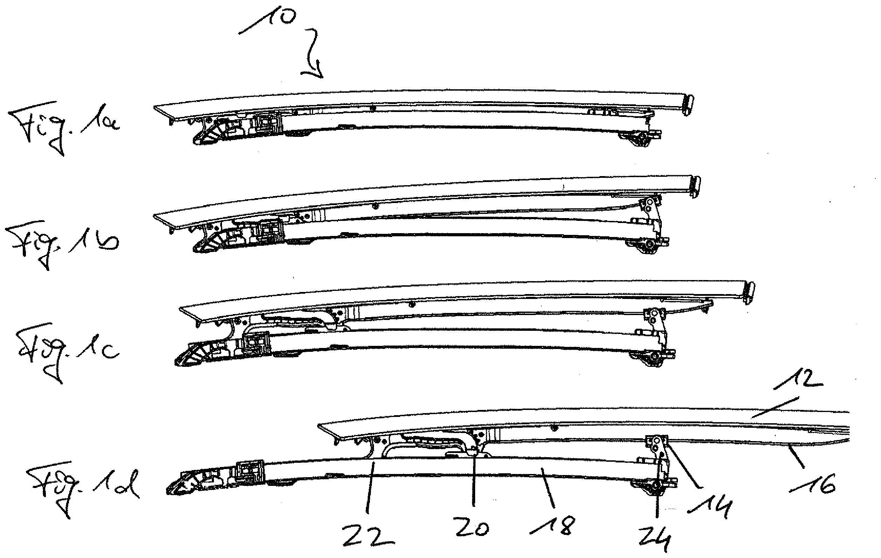

Fig. 1 zeigt eine Schiebedachanordnung 10 für ein nicht näher dargestelltes Fahrzeug. Die Schiebedachanordnung weist einen verlagerbaren Deckel 12 auf, welcher zum wahlweisen Öffnen und Verschließen einer Öffnung im Fahrzeug in einem Fahrzeugdach des Fahrzeugs ausgebildet ist. Der Deckel 12 kann hierzu entlang eins Gleiters 14 zum Freigeben der Dachöffnung in Fahrtrichtung nach hinten, in der Fig. 1 nach rechts, verlagert werden. Die Fig. 1 ist in vier Abbildungen 1a bis 1d aufgeteilt, die den Bewegungsablauf des Deckels 12 von der ersten Position der Fig. 1a, in welcher der Deckel 12 die zugehörige Öffnung im Fahrzeugdach verschließt, bis zur Fig. 1d, in welcher der Deckel 12 die Öffnung weitgehend freigibt und in Fahrtrichtung nach hinten verschoben ist, zeigen. Damit ein Öffnen und eine Verlagerung des Deckels 12 nach hinten erfolgen kann, muss der Deckel über benachbarte Bereiche des Fahrzeugdachs angehoben werden. Dies geschieht durch ein Anheben des Deckels 12 zunächst im Bereich seiner Hinterkante (Fig. 1 b). Nach dem ersten Anheben der Deckelhinterkante wird der Deckel 12 nach hinten verschoben (Fig. 1c), und dabei im hinteren Bereich noch weiter angehoben und nun auch im Bereich der Deckelvorderkante (Fig. 1c), und, bis zum Erreichen der vollen Ausstellposition (Fig. 1d), soweit nach hinten verlagert, bis er die Endposition der Fig. 1d erreicht. Der Deckel 12 wird hierzu über weitere Gleiter 20 und 22 entlang einer dachfest angeordneten Führungsschiene 18 verschiebbar abgestützt. Der erfindungsgemäße Gleiter 14 ist an einem Ausstellhebel 24 angeordnet. Dieser Ausstellhebel 24 wird bei einem Öffnen des Fahrzeugdachs, also beim Verlagern des Deckels 12 in Fahrtrichtung nach hinten, nach hinten verschwenkt und dabei aufgerichtet (siehe beispielsweise Fig. 1d), wodurch er die Deckelhinterkante nach oben bewegt. Der Gleiter 14 umfasst ein Führungselement 16, welches am Deckel 12 angeordnet ist. Der Deckel 12 ist somit nicht nur von den Gleitern 20 und 22 abgestützt, sondern er stützt sich auch über den Gleiter 14 ab, wobei dieser das Anheben der Deckelhinterkante über benachbarte Bereiche des Fahrzeugdachs bewirkt. Im hinteren Bereich des Deckels 12 verläuft das Führungselement 16 nach oben, also vom Fahrzeugdach weg. Diese Formgebung des Führungselements 16 dient als Führungskulisse und bewirkt das gewünschte Anheben der Deckelhinterkante. Das Ausstellen bzw. Verschwenken des Ausstellhebels 24 von der im Wesentlichen horizontalen ersten Position der Fig. 1a in die im Wesentlichen aufrechte Position der Fig. 1d kann dabei durch die Bewegung des Deckels 12 selbst bewirkt werden (beispielsweise über die Zusammenwirkung des Führungselements mit dem Gleiter 14, oder mittels eines Mitnehmers) oder ein über einen separaten Antrieb, der mit dem Antrieb des Deckels 12 gekoppelt sein kann. Der Gleiter 14 weist einen in den Fig. 1 bis 3 nicht sichtbaren inneren Metallbereich auf, der mit dem sichtbaren äußeren Kunststoffbereich 40 umspritzt ist. Der innere Metallbereich bildet somit einen stützenden Kern des Gleiters 14 aus.

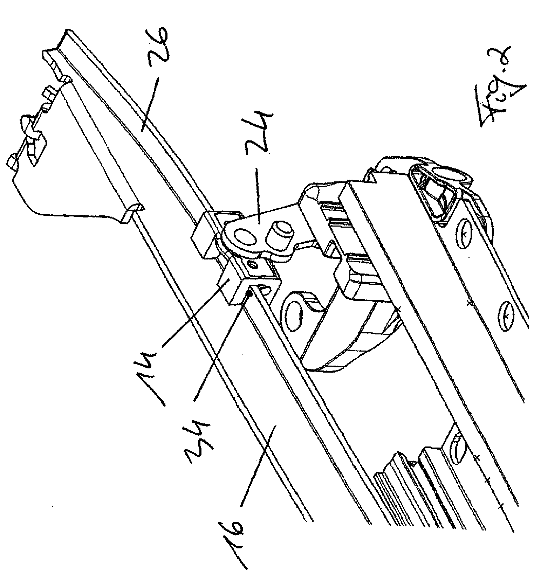

In der Fig. 2 ist das Führungselement 16 und der zugehörige Gleiter 14 der Fig. 1 vergrößert abgebildet. Wie bereits erläutert, ist der Gleiter 14 am Ausstellhebel 24 angeordnet. Der Ausstellhebel 24 ist in der Abbildung der Fig. 2 in einer bereits in Fahrtrichtung nach hinten verschwenkten Position dargestellt. Somit ist der in der Fig. 2 nicht dargestellte Deckel 12 im Bereich seiner Hinterkante bereits teilweise oder vollständig angehoben (siehe entsprechend Fig. 1b bis 1d). In der Fig. 2 ist zu erkennen, dass der Gleiter 14 einen Führungsabschnitt 26 des Führungselements 16 teilweise umgreift. Der Führungsabschnitt 26 ist dabei zusammen mit einem benachbarten Bereich des Führungselements 16 so ausgebildet, dass insgesamt eine L-Form entsteht. Der Gleiter 14 weist eine entsprechende L-förmige Öffnung 34 auf, sodass er die L-Form des Führungsabschnitts 26 aufnehmen kann. Der Führungsabschnitt 26 taucht dabei in die Öffnung 34 des Gleiters 14 ein und hintergreift den Gleiter 14 teilweise, sodass der Gleiter 14 zwar in Fahrtrichtung entlang des Führungselements 16 verschiebbar ist, durch das Hintergreifen aber ein Lösen des Gleiters 14 vom Führungselement 16 verhindert wird. Zur Montage wird daher der Führungsabschnitt 26 des Führungselements 16 von hinten oder von vorne in den Gleiter 14 eingeschoben.

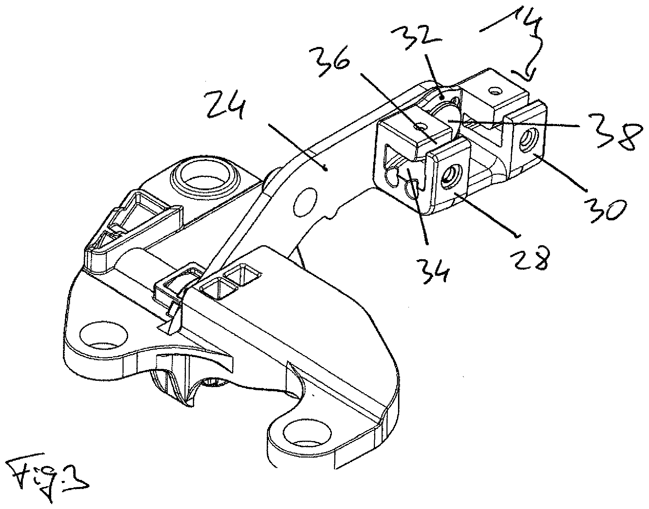

Anhand der Fig. 3 wird der erfindungsgemäße Gleiter 14 der Fig. 2 näher erläutert. Der Gleiter 14 ist dabei ohne das zugehörige Führungselement 16 der Fig. 2 abgebildet. Der Gleiter 14 weist eine vorzugsweise rechteckige Öffnung 34 auf, die zusammen mit einem Schlitz 36 eine L-förmige Öffnung des Gleiters 14 definiert, die entsprechend ausgebildet und dimensioniert ist, um den L-förmigen Führungsabschnitt 26 des Führungselements 16 aufzunehmen. Der Schlitz 36 wird im montierten Zustand des Gleiters 14 vom Führungselement 16, insbesondere von dessen Führungsabschnitt 26 durchdrungen, wobei dieser durch den Schlitz 36 in den Innenraum des Gleiters 14, der durch die Öffnung 34 gebildet wird, eintaucht. Im montierten Zustand ist der L-förmige Führungsabschnitt 26 so ausgerichtet, dass ein Schenkel des Führungsabschnitts 26 vertikal durch den Schlitz 36 verläuft und ein weiterer Schenkel horizontal in der Öffnung 34 angeordnet ist. Der horizontale Bereich des Führungsabschnitts 26 hintergreift daher einen oberen Teil des Gleiters 14, der dessen Öffnung 34 nach oben abgrenzt. Dadurch, dass der horizontale Abschnitt des Führungsabschnitts 26 länger ist als die Öffnungsweite des nach oben offenen Schlitzes 36 des Gleiters 14, können Gleiter 14 und Führungselement 16 nur voneinander gelöst werden, wenn der Gleiter entlang des Führungselements 16 soweit verschoben wird, dass das Führungselement 16 nach vorne oder hinten aus dem Gleiter 14 herausgezogen werden kann. Der Gleiter 14 weist in der Ausführungsform der Figuren 1 bis 4 einen ersten Abschnitt 28 und einen zweiten Abschnitt 30 auf, wobei beide Abschnitte die erläuterte L-Form als Öffnung aufweisen. Prinzipiell kann ein erfindungsgemäßer Gleiter aber auch lediglich einen solchen Abschnitt oder mehr als zwei solcher Abschnitte aufweisen. In der dargestellten Ausführungsform der Erfindung ist zwischen den beiden Abschnitten 28 und 30 ein Befestigungsbereich 32 angeordnet, welcher der Befestigung des Gleiters 14 am Ausstellhebel 24 dient. Hierzu weist der Gleiter 14 im Befestigungsbereich 32 eine Bohrung auf, durch welche eine Befestigungsachse 38 durch den Befestigungsbereich 32 mindestens teilweise hindurchtritt. Auf dieser Befestigungsachse 38 ist der Gleiter 14 um eine Längsachse der Befestigungsachse 38 verschwenkbar angeordnet. Die Längsachse der Befestigungsachse 38 ist dabei in einer Richtung quer zur Fahrzeuglängsachse ausgerichtet. Damit ein Lösen des Gleiters 14 von der Befestigungsachse 38 verhindert wird, ist eine Sicherung vorgesehen, die vorzugsweise als eine Vertaumelung der Befestigungsachse 38 ausgeführt ist. Unter einer "Vertaumelung" ist dabei eine plastische Verformung eines Endes der Befestigungsachse 38 zu verstehen (auch "Verstemmung" genannt), wobei durch diese Verformung eine unlösbare Verbindung zwischen Gleiter 14 und Befestigungsachse 38 erreicht wird. Die Befestigungsachse 38 ist wiederum am Ausstellhebel 24 befestigt und wird mit einer Verschwenkung dieses Ausstellhebels 24 ebenfalls verschwenkt. Die Befestigungsachse 38 ist relativ zum Ausstellhebel 24 oder zum Gleiter 14 verdrehbar ausgeführt. Im Ausführungsbeispiel der Fig. 3 ist die Befestigungsachse 38 fest, also nicht verdrehbar mit dem Ausstellhebel 24 verbunden, jedoch kann sich der Gleiter 14 um die Befestigungsachse 38 drehen. Somit kann der Gleiter 14 einer Kurve des Führungselementes 16 bzw. dessen Führungsabschnitt 26 folgen, indem er sich relativ zum Ausstellhebel 24 dreht. Das Führungselement 16 kann daher, wie in der Fig. 1d dargestellt, beispielsweise in einem hinteren Bereich des Deckels 12 nach oben verlaufen und in einem mittleren Bereich des Deckels 12 eher horizontal ausgerichtet sein. Der Gleiter 14 wird dabei entsprechend so relativ zum Ausstellhebel 24 so verschwenkt, dass er dem Verlauf des Führungselements 16 folgen kann.

Vorgesehenen oder fertigungsbedingten Toleranzen (wie beispielsweise des Führungselements 16) kann sich der Gleiter 14 weiterhin neben der Verschwenkung auch über eine federelastische Verformung anpassen.

Wie bereits erläutert, werden diese elastischen Eigenschaften durch den Aufbau des Gleiters 14 aus zwei Komponenten, nämlich aus einem Metallbereich oder einem Kunststoffbereich 40 erzielt. In den bisher erläuterten Fig. 1 bis 3 ist dabei nur der außenliegende Kunststoffbereich 40 zu sehen, mittels dessen ein innenliegender Metallbereich umschlossen, vorzugsweise umspritzt ist. Der Kunststoffbereich 40 des Kunststoffmaterials des Gleiters 14 ist dabei beispielsweise aus POM (Polyoxymethylen) gefertigt bzw. an dem innenliegenden Metallbereich angespritzt.

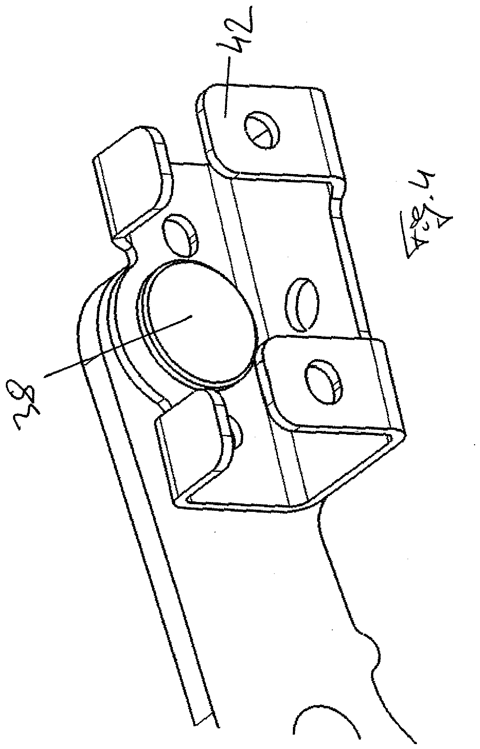

In der Fig. 4 ist der innenliegende Metallbereich 42 des Gleiters 12 der Figuren 1 bis 3 abgebildet. Somit ist die Fig. 4 eine Darstellung des Gleiters 12 der Figuren 1 bis 3, bei welchem der außenliegende Kunststoffbereich 40 transparent dargestellt (oder entfernt) ist. Beim Vergleich der Figuren 3 und 4 wird deutlich, dass der innenliegende Metallbereich 42 insgesamt die gleiche Grundform wie der Gleiter 14 aufweist. Der Gleiter 14 gemäß den Ausführungsbeispielen der Figuren 1 bis 4 stellt also einen käfigartigen Metallbereich 42 dar, welcher formerhaltend mit dem Kunststoffmaterial des Kunststoffbereichs 40 umspritzt wurde. Alternativ können auch Ausführungsformen eines erfindungsgemäßen Gleiters dadurch hergestellt werden, dass der Metallbereich 42 nur teilweise umspritzt wird bzw. dass nicht alle Elemente dieses erfindungsgemäßen Gleiters 14 durch entsprechende Metalleinlagen des Metallbereichs 42 abgestützt werden. So kann beispielsweise ein alternativer Gleiter zwei ebenfalls L-förmige Öffnungen aufweisen, wohingegen der innenliegende Metallbereich 42 nur bestimmte Elemente der gesamten Form des Gleiters abbildet.

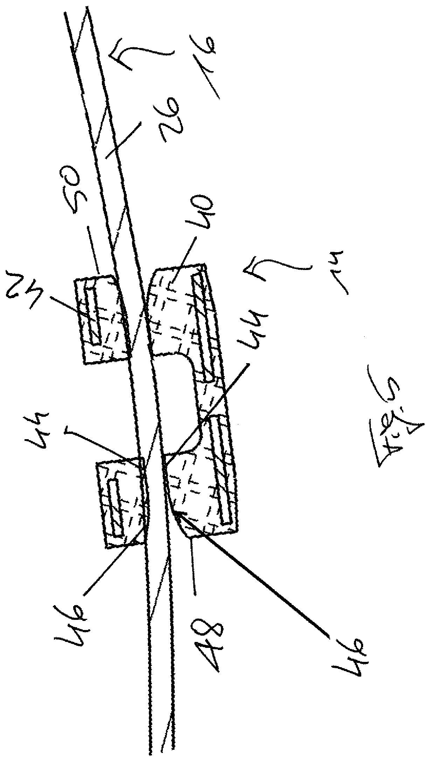

Die Fig. 5 zeigt den Gleiter 14 der vorhergehenden Figuren in einem Längsschnitt. Der Kunststoffbereich 40 des Gleiters 14 weist einen Kontaktbereich 44, der mit dem Führungsabschnitt 26 des Führungselements 16 in Kontakt tritt. Dieser Kontaktbereich 44 weist Wölbungen 46 auf, welche die Öffnung 34, durch die der Führungsabschnitt 26 durch den Gleiter 14 geführt ist, eingangsseitig, das heißt im Bereich jeweils der in Fahrtrichtung vorderen Stirnfläche 48 und hinteren Stirnflächen 50, erweitern. Diese Wölbungen 46 ermöglichen bzw. erleichtern das Führen des Gleiters 14 um eine dargestellte Krümmung des Führungselements 16.

### Bezugszeichenliste

- 10: Schiebedachanordnung
- 12: Deckel
- 14: Gleiter
- 16: Führungselement
- 18: Führungsschiene
- 20: Gleiter
- 22: Gleiter
- 24: Ausstellhebel
- 26: Führungsabschnitt
- 28: erster Abschnitt
- 30: zweiter Abschnitt
- 32: Befestigungsbereich
- 34: Öffnung
- 36: Schlitz
- 38: Befestigungsachse
- 40: Kunststoffbereich
- 42: Metallbereich
- 44: Kontaktbereich
- 46: Wölbungen
- 48: vordere Stirnfläche
- 50: hintere Sitrnfläche

## Patentansprüche

1. Gleiter (14) zum Führen eines verlagerbaren Elements (12) eines Fahrzeugs relativ zu einer Karosserie des Fahrzeugs, wobei der Gleiter (14) einen Kunststoffbereich (40) und einen Metallbereich (42) aufweist,
wobei der Gleiter (14) einteilig ausgeführt ist, und der Metallbereich (42) mit dem Kunststoffbereich (40) mindestens teilweise umspritzt ist, und der Gleiter (14) so ausgebildet ist, dass mindestens ein Abschnitt (28, 30) des Gleiters (14) ein Führungselement (16) des Fahrzeugs mindestens teilweise umgreifen kann;
**dadurch gekennzeichnet, dass**
der Metallbereich (42) als Federstahleinlage ausgebildet ist, die mit dem Kunststoffbereich (40) mindestens teilweise umspritzt ist.

2. Gleiter (14) nach Anspruch 1, **dadurch gekennzeichnet, dass** der Gleiter (14) eine durchgehende Öffnung (34) aufweist, die zur Aufnahme eines Querschnitts eines Führungsabschnitts (26) des Führungselements (16) ausgebildet ist, sodass der Gleiter (14) relativ zum und entlang des Führungselements (16) verlagerbar ist.

3. Gleiter (14) nach Anspruch 2, **dadurch gekennzeichnet, dass** der Querschnitt des Führungsabschnitts (26) L- oder U- förmig ausgebildet ist, und die Öffnung (34) des Gleiters (14) L- oder U- förmig ausgebildet ist.

4. Gleiter (14) nach Anspruch 3, **dadurch gekennzeichnet, dass** der Kunststoffbereich (40) und vorzugsweise auch der Metallbereich (42) die durchgehende L- oder U-förmige Öffnung (34) aufweisen.

5. Gleiter (14) nach einem der vorhergehenden Ansprüche, **dadurch gekennzeichnet, dass** der mindestens eine Abschnitt (28, 30) quer zu einer Längsachse des Gleiters (14) eine Öffnung (34) bis auf einen Schlitz (36) umschließt, wobei die Öffnung (34) und der Schlitz (36) zur Aufnahme eines Führungsabschnitts (26) eines Führungselements (16) ausgebildet sind, indem der Führungsabschnitt (26) durch den Schlitz (36) in die Öffnung (34) eingreifen kann, wobei der Eingriff dadurch gegen ein Lösen gesichert ist, dass der vorgesehene Führungsabschnitt (26) im Bereich der Öffnung (34) breiter ist als der Schlitz (36), sodass der Gleiter (20) entlang des Führungselements (16) und relativ zum Führungsabschnitt (26) verlagerbar ist und diesen führt.

6. Gleiter (14) nach Anspruch 5, **dadurch gekennzeichnet, dass** der Gleiter (14) zwei solcher Abschnitte (28, 30) aufweist, die in einer Längsrichtung des Gleiters (14) hintereinander angeordnet sind, und ein zwischen diesen Abschnitten angeordneten Befestigungsbereich (32), an dem eine Befestigungsachse (38) angeordnet ist zum verschwenkbaren Lagern des Gleiters (14) um eine erste Drehachse.

7. Gleiter (14) nach Anspruch 6, **dadurch gekennzeichnet, dass** die Befestigungsachse (38) durch eine Öffnung im Befestigungsbereich (32) gesteckt und gegen ein Lösen der Befestigung gesichert ist, indem an dem durchgesteckten Ende der Befestigungsachse (38) hinter der Öffnung eine Sicherung vorzugsweise in Form einer Vertaumelung angeordnet ist.

8. Gleiter (14) nach einem der vorhergehenden Ansprüche, **dadurch gekennzeichnet, dass** der Kunststoffbereich (40) in einem Kontaktbereich (44), der zum Eingriff mit dem Führungselement (16) angepasst ist, Wölbungen (46) aufweist, welche die Öffnung (34) durch die der Führungsabschnitt (26) durch den Gleiter (14) geführt ist, im Bereich jeweils der in Fahrtrichtung vorderen Stirnfläche (48) und hinteren Stirnfläche (50), erweitern.

9. Gleiter (14) nach einem der vorhergehenden Ansprüche, **dadurch gekennzeichnet, dass** der Metallbereich (42) mit dem Kunststoffbereich (40) vollständig umspritzt ist.

10. Fahrzeug mit einem Gleiter (14) nach einem der vorhergehenden Ansprüche zum Führen eines verlagerbaren Elements (12) des Fahrzeugs relativ zu einer Karosserie des Fahrzeugs, wobei der Gleiter (14) entlang eines Führungselements (16) verschiebbar angeordnet ist

11. Fahrzeug nach Anspruch 10, **dadurch gekennzeichnet, dass** das Führungselement (16) in einer Richtung im Wesentlichen parallel zur Fahrzeuglängsachse ausgerichtet ist und einen Führungsabschnitt (26) aufweist, der quer zu der Fahrzeuglängsachse einen Querschnitt aufweist, wobei der Gleiter (14) eine durchgehende Öffnung (34) aufweist, die zur Aufnahme des Querschnitts des Führungsabschnitts (26) ausgebildet ist, sodass der Gleiter (14) entlang des Führungselements (16) in der Richtung parallel zur Fahrzeuglängsachse und relativ zum Führungsabschnitt (26) verlagerbar ist.

12. Fahrzeug nach Anspruch 10 oder 11, **dadurch gekennzeichnet, dass** das verlagerbare Element ein Deckel (12) zum wahlweisen Öffnen und Verschließen einer Öffnung in einem Dach des Fahrzeugs ist, das Führungselement (16) an dem Deckel (12) angeordnet ist, der Gleiter (14) an einem Ausstellhebel (24) angeordnet ist, der um eine zweite Drehachse, die quer zur Fahrzeuglängsachse ausgerichtet ist, verschwenkt werden kann, und der Deckel (12) im Bereich einer Deckelhinterkante durch ein Aufstellen des Ausstellhebels (24) bei einer Bewegung des Deckels (12) nach hinten über eine Dachfläche des Dachs angehoben wird, wobei bei der Bewegung des Deckels (12) relativ zur Dachöffnung das Führungselement (16) relativ zum Gleiter (14) bewegt und durch diesen geführt wird.

## Claims

1. Slider (14) for guiding a displaceable element (12) of a vehicle relative to a body of the vehicle, wherein the slider (14) has a plastics region (40) and a metal region (42),
wherein the slider (14) is embodied in one piece, and the metal region (42) is at least partially overmolded with the plastics region (40), and the slider (14) is configured such that at least one portion (28, 30) of the slider (14) can engage at least partially around a guide element (16) of the vehicle;
**characterized in that**
the metal region (42) is configured as a spring-steel insert which is at least partially overmolded with the plastics region (40).

2. Slider (14) according to Claim 1, **characterized in that** the slider (14) has a through-opening (34) which is configured to receive a cross section of a guide portion (26) of the guide element (16) such that the slider (14) is displaceable relative to and along the guide element (16).

3. Slider (14) according to Claim 2, **characterized in that** the cross section of the guide portion (26) is configured in an L-shaped or U-shaped manner, and the opening (34) in the slider (14) is configured in an L-shaped or U-shaped manner.

4. Slider (14) according to Claim 3, **characterized in that** the plastics region (40) and preferably also the metal region (42) have the L-shaped or U-shaped through-opening (34).

5. Slider (14) according to one of the preceding claims, **characterized in that** the at least one portion (28, 30) encloses an opening (34) transversely to a longitudinal axis of the slider (14) except for a slot (36), wherein the opening (34) and the slot (36) are configured to receive a guide portion (26) of a guide element (16) **in that** the guide portion (26) can engage in the opening (34) through the slot (36), wherein the engagement is secured against releasing **in that** the provided guide portion (26) is wider than the slot (36) in the region of the opening (34) such that the slider (20) is displaceable along the guide element (16) and relative to the guide portion (26) and guides the latter.

6. Slider (14) according to Claim 5, **characterized in that** the slider (14) has two such portions (28, 30), which are arranged in succession in a longitudinal direction of the slider (14), and a fastening region (32) arranged between these portions, a fastening pin (38) being arranged at said fastening region (32) in order to mount the slider (14) in a pivotable manner about a first rotation axis.

7. Slider (14) according to Claim 6, **characterized in that** the fastening pin (38) is plugged through an opening in the fastening region (32) and is secured against releasing of the fastening **in that** a securing means preferably in the form of a wobble-type securing means is arranged behind the opening on the plugged-through end of the fastening pin (38).

8. Slider (14) according to one of the preceding claims, **characterized in that** the plastics region (40) has bulges (46) in a contact region (44) that is adapted to engagement with the guide element (16), said bulges (46) expanding the opening (34), through which the guide portion (26) is guided through the slider (14), in the region of the respective front end face (48) and rear end face (50) in the direction of travel.

9. Slider (14) according to one of the preceding claims, **characterized in that** the metal region (42) is overmolded entirely with the plastics region (40).

10. Vehicle having a slider (14) according to one of the preceding claims for guiding a displaceable element (12) of the vehicle relative to a body of the vehicle, wherein the slider (14) is arranged so as to be movable along a guide element (16).

11. Vehicle according to Claim 10, **characterized in that** the guide element (16) is oriented in a direction substantially parallel to the vehicle longitudinal axis and has a guide portion (26) which has a cross section transversely to the vehicle longitudinal axis, wherein the slider (14) has a through-opening (34) which is configured to receive the cross section of the guide portion (26) such that the slider (14) is displaceable along the guide element (16) in the direction parallel to the vehicle longitudinal axis and relative to the guide portion (26).

12. Vehicle according to Claim 10 or 11, **characterized in that** the displaceable element is a cover (12) for optionally opening and closing an opening in a roof of the vehicle, the guide element (16) is arranged on the cover (12), the slider (14) is arranged on a tilt lever (24) which can be pivoted about a second rotation axis that is oriented transversely to the vehicle longitudinal axis, and the cover (12) is lifted in the region of a cover rear edge by deployment of the tilt lever (24) during a movement of the cover (12) toward the rear over a roof surface of the roof, wherein, during the movement of the cover (12) relative to the roof opening, the guide element (16) is moved relative to the slider (14) and is guided by the latter.

## Revendications

1. Coulisseau (14) de guidage d'un élément mobile (12) d'un véhicule par rapport à une carrosserie du véhicule, dans lequel le coulisseau (14) présente une zone en matière plastique (40) et une zone en métal (42),
dans lequel le coulisseau (14) est réalisé en une seule pièce, et la zone en métal (42) est au moins partiellement enrobée par la zone en matière plastique (40), et le coulisseau (14) est configuré de telle manière qu'au moins une partie (28, 30) du coulisseau (14) puisse entourer au moins en partie un élément de guidage (16) du véhicule,
**caractérisé en ce que** la zone en métal (42) est réalisée sous la forme d'un insert en acier à ressort, qui est au moins partiellement enrobé par la zone en matière plastique (40).

2. Coulisseau (14) selon la revendication 1, **caractérisé en ce que** le coulisseau (14) présente une ouverture continue (34), qui est configurée de façon à recevoir une section transversale d'une partie de guidage (26) de l'élément de guidage (16), de telle manière que le coulisseau (14) soit déplaçable par rapport à et le long de l'élément de guidage (16).

3. Coulisseau (14) selon la revendication 2, **caractérisé en ce que** la section transversale de la partie de guidage (26) est réalisée en forme de L ou de U, et l'ouverture (34) du coulisseau (14) est réalisée en forme de L ou de U.

4. Coulisseau (14) selon la revendication 3, **caractérisé en ce que** la zone en matière plastique (40) et de préférence aussi la zone en métal (42) présentent l'ouverture continue en forme de L ou de U (34).

5. Coulisseau (14) selon l'une quelconque des revendications précédentes, **caractérisé en ce que** ladite au moins une partie (28, 30) entoure transversalement à un axe longitudinal du coulisseau (14) une ouverture (34) jusqu'à une fente (36), dans lequel l'ouverture (34) et la fente (36) sont configurées de façon à recevoir une partie de guidage (26) d'un élément de guidage (16), par le fait que la partie de guidage (26) peut s'engager à travers la fente (36) dans l'ouverture (34), dans lequel l'engagement est protégé contre un desserrage du fait que la partie de guidage prévue (26) est plus large dans la région de l'ouverture (34) que la fente (36), de telle manière que le coulisseau (20) soit déplaçable le long de l'élément de guidage (16) et par rapport à la partie de guidage (26) et guide celle-ci.

6. Coulisseau (14) selon la revendication 5, **caractérisé en ce que** le coulisseau (14) présente deux parties (28, 30), qui sont disposées l'une derrière l'autre dans une direction longitudinale du coulisseau (14), et une zone de fixation (32) disposée entre ces deux parties, sur laquelle un axe de fixation (38) est disposé pour le support pivotant du coulisseau (14) autour d'un premier axe de rotation.

7. Coulisseau (14) selon la revendication 6, **caractérisé en ce que** l'axe de fixation (38) est introduit à travers une ouverture dans la zone de fixation (32) et est protégé contre un desserrage de la fixation, par le fait qu'un blocage de préférence sous la forme d'une partie décalée sur l'extrémité engagée de l'axe de fixation (38) est disposée derrière l'ouverture.

8. Coulisseau (14) selon l'une quelconque des revendications précédentes, **caractérisé en ce que** la zone en matière plastique (40) présente dans une zone de contact (44), qui est adaptée pour l'engagement avec l'élément de guidage (16), des courbures (46) qui élargissent l'ouverture (34) à travers laquelle la partie de guidage (26) est guidée par le coulisseau (14), respectivement dans la région de la face frontale avant (48) et de la face frontale arrière (50) dans la direction de déplacement.

9. Coulisseau (14) selon l'une quelconque des revendications précédentes, **caractérisé en ce que** la zone en métal (42) est entièrement enrobée par la zone en matière plastique (40).

10. Véhicule avec un coulisseau (14) selon l'une quelconque des revendications précédentes pour le guidage d'un élément déplaçable (12) du véhicule par rapport à une carrosserie du véhicule, dans lequel le coulisseau (14) est disposé de façon déplaçable le long d'un élément de guidage (16).

11. Véhicule selon la revendication 10, **caractérisé en ce que** l'élément de guidage (16) est orienté dans une direction essentiellement parallèle à l'axe longitudinal du véhicule et présente une partie de guidage (26), qui présente une section transversale transversalement à l'axe longitudinal du véhicule, dans lequel le coulisseau (14) présente une ouverture continue (34), qui est configurée de façon à recevoir la section transversale de la partie de guidage (26), de telle manière que le coulisseau (14) soit déplaçable le long de l'élément de guidage (16) dans la direction parallèle à l'axe longitudinal du véhicule et par rapport à la partie de guidage (26).

12. Véhicule selon la revendication 10 ou 11, **caractérisé en ce que** l'élément déplaçable est un couvercle (12) permettant au choix l'ouverture et la fermeture d'une ouverture dans un toit du véhicule, l'élément de guidage (16) est disposé sur le couvercle (12), le coulisseau (14) est disposé sur un levier extensible (24), qui peut pivoter autour d'un deuxième axe de rotation, qui est orienté transversalement à l'axe longitudinal du véhicule, et le couvercle (12) est soulevé dans la région du bord arrière du couvercle par une extension du levier extensible (24) lors d'un mouvement du couvercle (12) vers l'arrière au-dessus d'une surface de toit du toit, dans lequel l'élément de guidage (16) se déplace par rapport au coulisseau (14) et est guidé par celui-ci lors du mouvement du couvercle (12) par rapport à l'ouverture de toit.
